Europäisches Patentamt

**European Patent Office**

**Office européen des brevets**

(19)

(11) Numéro de publication: **0 169 127
B1**

(12)

# FASCICULE DE BREVET EUROPEEN

(45) Date de publication du fascicule du brevet: **18.07.90**

(51) Int. Cl.⁵: **G 01 S 13/34,** G 01 S 13/70

(21) Numéro de dépôt: **85401296.0**

(22) Date de dépôt: **27.06.85**

(54) **Sonde radioaltimétrique à modulation de fréquence.**

(30) Priorité: **29.06.84 FR 8410349**

(43) Date de publication de la demande:
**22.01.86 Bulletin 86/04**

(45) Mention de la délivrance du brevet:
**18.07.90 Bulletin 90/29**

(84) Etats contractants désignés:
**DE IT**

(56) Documents cités:
**FR-A-1 548 893
US-A-2 839 734**

**IEEE TRANSACTIONS ON GEOSCIENCE
ELECTRONICS, vol. GE-9, no. 2, avril 1971, pages
86-89, New York, US; G.H. BARRY: "A lowpower vertical-incidence ionosonde"**

**L'ONDE ELECTRIQUE, vol. 51, no. 5, mai 1971,
pages 406-410, Paris, FR; J.P. LANDROT:
"Radioaltimètre à modulation de fréquence"**

(73) Titulaire: **THOMSON-CSF
51, Esplanade du Général de Gaulle
F-92800 Puteaux (FR)**

(72) Inventeur: **Lazarus, Michel
THOMSON-CSF SCPI 173, bld Haussmann
F-75379 Paris Cedex 08 (FR)**

(74) Mandataire: **El Manouni, Josiane et al
THOMSON-CSF SCPI
F-92045 PARIS LA DEFENSE CEDEX 67 (FR)**

Courier Press, Leamington Spa, England.

# EP 0 169 127 B1

## Description

L'invention concerne une sonde radioaltimétrique à modulation de fréquence, plus particulièrement destinée à un missile volant à très base altitude.

La technique des radioaltimètres à onde continue modulée en fréquence, ou radioaltimètre FM/CW selon la terminologie anglo-saxonne, a progressé depuis de nombreuses décennies. Les principes de base des systèmes radar à onde continue FM/CW est largement décrite dans la littérature technique correspondante, et, notamment dans l'ouvrage de M. I. SKOLNIK "Radar Handbook", chapitre 16, édité en 1970 par McGraw Hill.

Le guidage terminal des missiles, tels que les missiles AIR-MER qui approchent la cible en vol rasant, nécessite de disposer à bord du missile d'une sonde radioaltimétrique capable d'opérer dans la tranche d'altitude comprise, par exemple, entre 75 m et 1,5 m. Un radioaltimètre pour missile est un équipement consommable, d'où il en résulte que son coût de construction est un facteur primordial. Les autres facteurs qui doivent être pris en considération sont: la compacité de l'équipement et le coût d'installation sur le missile.

Il est connu de réaliser des radioaltimètres FM/CW utilisant deux antennes séparées. Un exemple d'un tel radioaltimètre est décrit dans un article de l'Onde Electrique, vol. 51, No. 5, Mai 1971, pages 406 à 410 "Radioaltimètre à modulation de fréquence". Ce radioaltimètre comprend une boucle d'asservissement reliant la sortie du récepteur à l'entrée du modulateur d'émetteur pour maintenir constant l'écart de fréquence entre émission et réception par asservissement de la pente de modulation de l'émetteur. Mais l'emploi de deux antennes implique des inconvénients liés aux problèmes mécaniques d'implantation sur le véhicule porteur et aux problèmes électriques de liaison avec l'équipement, ce qui entraîne des contraintes de montage, une complexité et un coût accrus.

Il a déjà été proposé dans le brevet européen 0 118 342 un radioaltimètre simplifié dans lequel l'émetteur et le récepteur fonctionnent simultanément en utilisant une antenne directive commune. Dans ce radioaltimètre de l'art antérieur, le signal local du mélangeur à radiofréquence du récepteur est obtenu par réflexion partielle du signal d'émission sur le T.O.S. (taux d'onde stationnaire) de l'antenne. La construction de l'équipement se trouve ainsi notablement simplifié, toutfois cette simplification est obtenue au détriment de l'altitude minimale mesurable.

Le but de l'invention est de réaliser une sonde radioaltimétrique simplifiée, capable de réduire l'altitude minimum mesurable.

Le présente invention a pour objet une sonde radioaltimétrique à modulation de fréquence telle que définie dans les revendications.

D'autres caractéristiques de l'invention apparaîtront dans la description détaillée qui va suivre, faite en regard de dessins annexés; sur ces dessins:

la figure 1 est un bloc diagramme simplifié d'un radioaltimètre mono-antenne de l'art antérieur;

la figure 2 est un bloc diagramme qui représente la structure de base du radioaltimètre selon l'invention;

la figure 3 est un chronogramme des principaux signaux du radioaltimètre;

la figure 4 est un schéma synoptique qui montre une forme de construction du commutateur émission-réception;

la figure 5 est un chronogramme des signaux du commutateur émission-réception;

la figure 6 est un schéma synoptique qui représente une forme de réalisation d'un circuit de porte du commutateur E/R;

la figure 7 est un bloc diagramme qui représente une variante de réalisation du radioaltimètre.

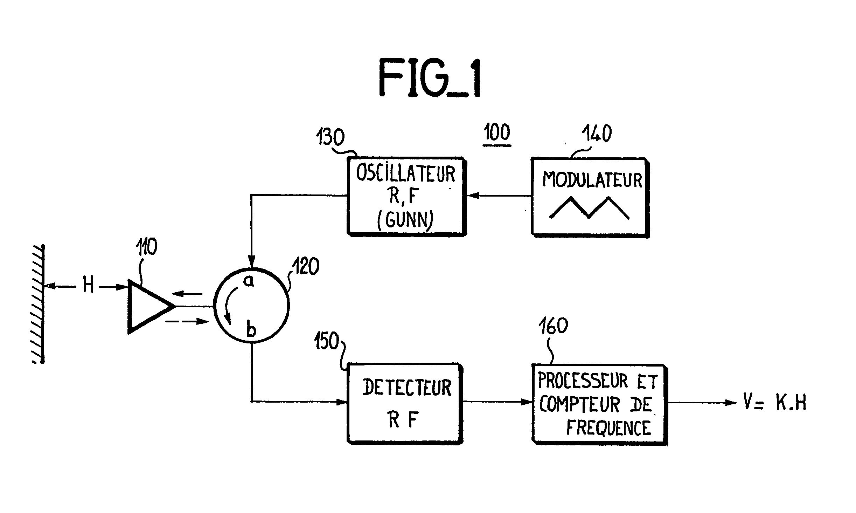

La figure 1 est un bloc diagramme simplifié qui représente un radioaltimètre mono-antenne *100* de l'art antérieur connu par le brevet EP—A—0 118 342. Une antenne directive 110 est reliée à un circulateur 120 ayant un accès d'entrée (a) et un accès de sortie (b). A l'accès d'entrée du circulateur est connecté un émetteur à onde continue qui comprend un oscillateur à radiofrequence 130 modulable en fréquence par un modulateur 140 lequel délivre des signaux périodiques en dents de scie symétriques et de période de récurrence fixe. A l'accès de sortie du circulateur, est connecté un récepteur homodyne qui comprend un détecteur à radiofréquence et un processeur 160 incluant: un amplificateur large bande à audiofréquence et un compteur de fréquence. L'onde locale du détecteur radiofréquence 150 est obtenue par reflexion partielle du signal d'émission sur le TOS (taux d'onde stationnaire) de l'antenne 110. Ce radioaltimètre dont la construction est relativement simple présente un inconvénient majeur du fait que le bruit d'amplitude de l'émetteur n'est pas éliminée, ou tout au moins atténué dans le détecteur à radiofréquence. Il en résulte que l'altitude minimale mesurable par ce radioaltimètre est limitée. Dans ce type de radioaltimètre l'altitude minimale mesurable Hmax se situe entre 6 et 10 mètres.

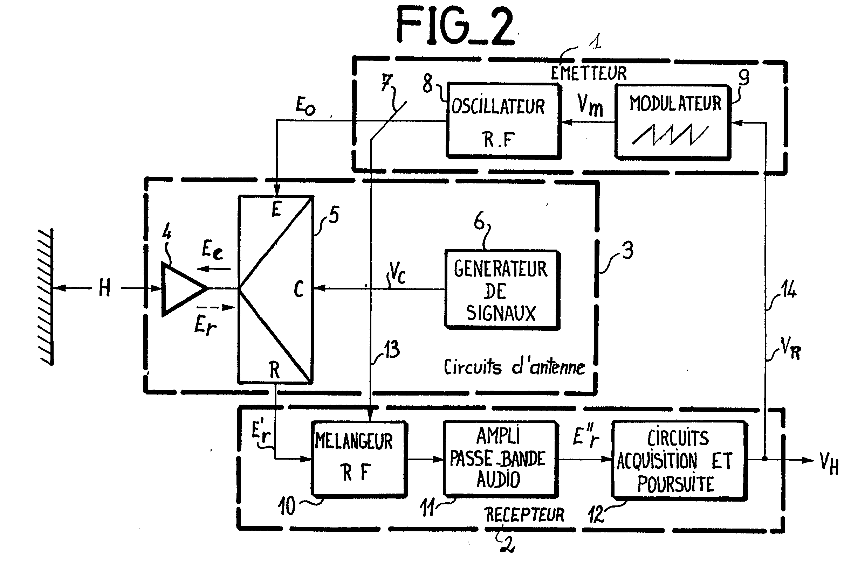

La figure 2 est un bloc diagramme que représente la structure de base d'un radioaltimètre selon l'invention. Le radioaltimètre comprend trois sous-ensembles principaux: un émetteur 1, un récepteur 2, et une antenne directive et ses circuits électroniques de commande 3. L'antenne directive 4 est connectée à un commutateur émission-réception 5 à radiofréquence dont la fonction est de connecteur alternativement l'émetteur et le récepteur sur l'antenne. Le commutateur émission-réception (E/R) comporte: un accès d'entrée (E) relié à l'émetteur 1, un accès de sortie (R) relié au récepteur 2 et une entrée de commande connectée à un générateur 6 de signaux de commande (Vc). Le sous-ensemble émetteur 1 comprend,

2

connectés en série: un coupleur directif 7, un oscillateur 8 à radiofréquence (RF) modulable en fréquence, et un modulateur 9 qui fournit des signaux en dents de scie Vm. Le sous-ensemble récepteur 2 comprend, connectés en série: un mélangeur équilibré à radiofréquence 10, un amplificateur passe-bande à audiofréquence 11 et des circuits 12 d'acquisition et de poursuite du signal écho retourné par le sol. Une ligne de transmission 13 connectée entre le coupleur directif 7 et le mélangeur à radiofréquence 10 permet au récepteur d'opérer sur le mode homodyne. Enfin une liaison 14 entre la sortie du récepteur et l'entrée de commande du modulateur 9 complète la structure du radioaltimètre. Le signal de commande $V_V$ présent sur la liaison 14 est un signal continu dont l'amplitude est, sensiblement, inversement proportionnel à l'altitude mesurée. Le récepteur fournit un signal de mesure $V_H$ représentatif de l'altitude mesurée.

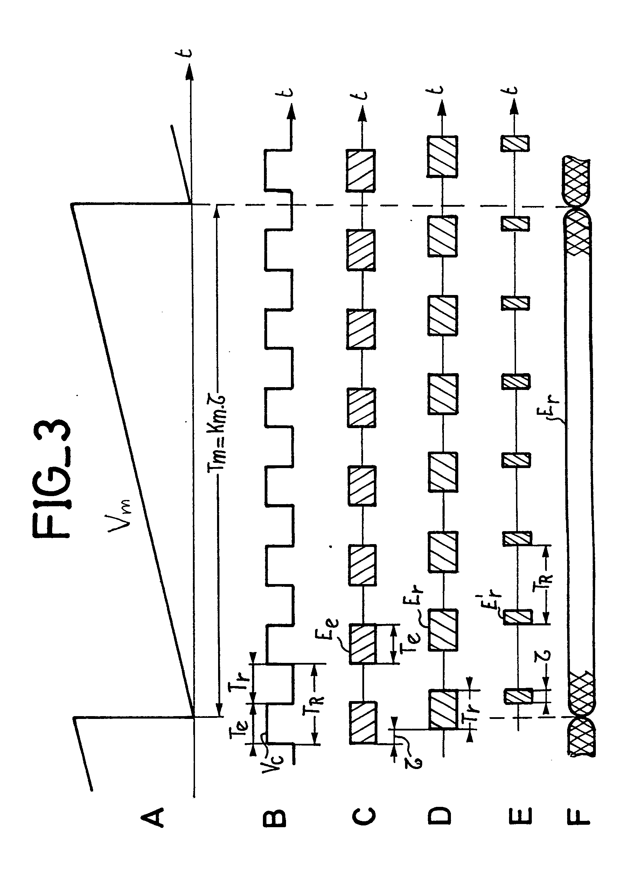

La figure 3 est un chronogramme qui montre la forme d'onde des principaux signaux du radioaltimètre. La courbe $A$ montre la forme d'onde du signal de modulation Vm de l'oscillateur à radiofréquence de l'émetteur. Ce signal de modulation est périodique et sa fréquence de récurrence. Tm est donnée par la relation suivante:

$$Tm = Km \cdot \tau \tag{1}$$

où Km est un facteur de proportionnalité constant, et $\tau$ le temps de retard du signal écho d'altitude donné par la relation:

$$\tau = 2H/C \tag{2}$$

où H est l'altitude au-dessus du sol et C la vitesse de propagation des ondes électromagnétiques. L'amplitude de ces signaux en dents de scie est maintenue constante et la déviation de fréquence $\Delta F$, de l'émetteur est donnée par la relation:

$$\Delta F(t) = Kv \cdot Vm(t) \tag{3}$$

où Kv est un facteur de proportionnalité constant.

La courbe $B$ représente la forme d'onde du signal de commande Vc du commutateur E/R, dont la période de récurrence TR est donnée par la relation:

$$TR = (Te + Tr) = \frac{4Hmax}{C} = 2\tau max \tag{4}$$

où

Te est la durée pendant laquelle le commutateur se trouve dans la position émission

Tr est la durée pendant laquelle le commutation E/R se trouve dans la position réception

Hmax est l'altitude maximale de mesure du radioaltimètre.

La courbe $C$ représente la forme d'onde du signal à radiofréquence Ee rayonné par l'antenne.

La courbe $D$ représente la forme d'onde du signal écho Er capté par l'antenne, ce signal écho est retardé d'un temps $\tau = 2H/C$ par rapport au signal Ee rayonné par l'antenne.

La courbe $E$ représente la forme d'onde des signaux échos à l'entrée du mélangeur à radiofréquence, la durée des signaux élémentaires est sensiblement égale au temps de retard $\tau$ du signal écho.

La courbe $F$ représente la forme d'onde des signaux de sortie E''r à audiofréquence délivrés par l'amplificateur passe-bandé à audiofréquence du récepteur; la période de ces signaux est égale à la période de récurrence Tm des signaux de modulation en fréquence de l'émetteur. La fréquence de ces signaux E''r est égale à la fréquence du battement $f_b$ entre le signal local du mélanger à radiofréquence et le signal écho altitude. La fréquence de battement $f_b$ est donnée par la relation:

$$f_b = \frac{\Delta F}{Tm} \cdot \tau = \frac{\Delta F}{Km} < FR = TR^{-1} \tag{5}$$

La puissance moyenne $\overline{Pr}$ du signal écho E'r à l'entrée du mélangeur à radiofréquence est donnée par l'équation générale:

$$\overline{Pr} = \frac{Pe \cdot GA \cdot \lambda^2 o \cdot \sigma o \cdot \eta c}{(4\pi)^2 \, H^2} \left(\frac{\tau}{TR}\right) \tag{6}$$

où

Pe est la puissance de sortie de l'oscillateur à radiofréquence;

$G_A$ le gain de l'antenne directive

$\lambda^2 o$ la longeuur d'onde de fonctionnement du radioaltimètre;

$\sigma o$ le coefficient de réflectivité du sol;

H l'altitude au-dessus du sol;

$T_R$ la période de récurrence des signaux de commande Vc du commutateur E/R;

$\tau$ le retard de temps du signal écho d'altitude;

$\eta c$ les pertes de transmission du commutateur E/R.

Les signaux échos E'r sont détectés dans le mélangeur à radiofréquence 10 puis amplifiés dans l'amplificateur passe-bande à audiofréquence 11. Le spectre des signaux E'r est un spectre de raies formé d'une raie à la fréquence de battement fb et de raies latérales de fréquences fb $\pm$ N. FR dont la puissance dépend du rapport $\tau$/TR. La fréquence de découpage TR est notablement plus élevée que la fréquence de battement fb, et l'amplificateur à audiofréquence 11 comporte un filtre passe-bande ayant une fréquence de coupure haute FcH et une fréquence de coupure basse FcB telles que:

$$1/Tm < FcB < fb < FcH < FR$$

Dans ces conditions l'amplificateur à audiofréquence 11 amplifie la composante du signal écho de fréquence fb et élimine les composantes du signal écho de fréquence fb $\pm$ N.FR. Il en résulte que la puissance moyenne $\overline{Pr_1}$ normalisée (gain du récepteur égal à l'unité) du signal à audiofréquence E''r est donnée par l'léquation:

$$Pr = \frac{Pe \cdot GA \cdot \lambda^2 o \cdot \sigma o \cdot \eta c}{(4\pi)^2 \cdot H^2} \cdot \left(\frac{\tau^2}{TR}\right) \tag{7}$$

puisque $\tau = 2H/C$, cette équation peut s'écrire:

$$\overline{Pr_1} = KoPe\, \sigma o \tag{7a}$$

avec

$$Ko = \frac{GA \cdot \lambda^2 o \cdot \eta s}{4\pi^2 \cdot C^2 \cdot TR^2} = Cte \tag{7b}$$

avec $\eta s$ les pertes du système, comprenant les pertes c du commutateur E/R et les pertes de conversion $\eta m$ du mélangeur d'entrée du récepteur.

On pourra alors remarquer que le niveau de puissance du signal de sortie E''r de l'amplificateur à audiofréquence est indépendante de l'altitude de mesure si la condition:

$$\tau max = \frac{2Hmax}{C} = Te = TR/2$$

est satisfaite.

A titre illustratif, si l'altitude maximale de mesure Hmax = 75m, alors la fréquence de récurrence FR des signaux de commande Vc du commutateur E/R est égale à C/4Hmax = 1MHz.

L'altitude minimale Hmin de mesure du radioaltimétre est donnée par la relation approximative:

$$Tm \cdot f_b = \frac{\Delta F \cdot 2\, Hmin}{C} = 1$$

ou

$$Hmin = \frac{C}{2 \cdot \Delta F}$$

et la période de récurrence minimal T'm du signal de modulation de l'émetteur est donnée par la relation:

$$T'm = \frac{1}{f_b}$$

A titre illustratif, si $\Delta F$ = 100 MHz et $f_b$ = 20 KHz, Hmin = 1,5 mètres et T'm = 50 µs.

Dans ce radioaltimètre le niveau moyen du signal écho est indépendant de l'altitude au-dessus du sol, alors le gain du récepteur est maintenu constant.

Si l'on se reporte à la figure 2 on peut remarquer que le TOS présenté par l'antenne directive 1 n'est pas un paramètre critique puisque le signal d'émission n'est pas transmis pendant les périodes de réception Tr de l'écho d'altitude. Il en résulte que la construction de l'antenne est facilitée, ainsi celle-ci peut être constituée par un réseau de fentes rayonnantes fabriqué selon la technique des circuits imprimés. On pourra également noter que les longueurs électriques de la ligne de transmission 13 doit être préférablement égale à la longueur électrique du trajet du coupler directif 7 à l'entrée du signal du mélangeur à radiofréquence 10, via l'antenne 4. L'oscillatuer à radiofréquence 8 peut être constitué par un

4

oscillateur GUNN couplé à un élément varactor sur lequel est appliqué le signal de modulation Vm. Le mélangeur à radiofréquence 10 doit rejeter, ou tout au moins, notablement atténuer les bruits d'amplitude et la composante d'intermodulation de l'oscillateur à radiofréquence 8. La bande passante de l'amplificateur à audiofréquence 11 doit être conformé pour atténuer sensiblement la fréquence maximale de récurrence du signal de modulation en fréquence de l'émetteur. La stabilité de fréquence du générateur 6 de signaux de commande Vc du commutateur E/R n'est pas particulièrement critique et une stabilité de l'ordre de quelques millièmes apparaît suffisante. Les circuits d'acquisition et de poursuite 12 opèrant selon deux modes de fonctionnement: un premier mode en boucle ouverte pendant lequel la tension du signal de sortie $V_H$ est balayée entre les valeurs extrêmes correspondant aux altitudes minimale Hmin et maximale Hmax de fonctionnement du radioaltimètre, et un mode en boucle fermée pendant lequel la fréquence du signal de sortie E''r de l'amplificateur à audiofréquence est maintenue à sa valeur nominale.

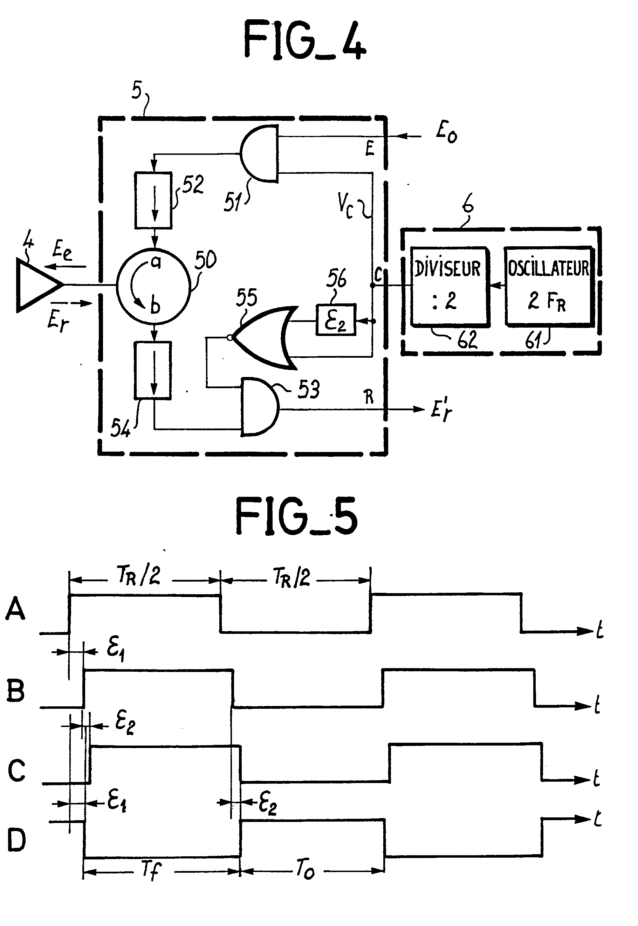

La figure 4 est un schéma synoptique qui montre une forme de construction du commutateur E/R, 5, de l'antenne 4. L'antenne 4 est connectée à un circulateur 50 comportant une entrée émission (a) et une sortie réception (b). L'entrée émission du circulateur est connectée à un premier circuit de porte 51 par l'intermédiaire d'un isolateur unidirectionnel 52. La sortie réception du circulateur est connectée à un second circuit de porte 53 par l'intermédiaire d'un isolateur unidirectionnel 54. L'entrée de commande de la première porte reçoit les signaux de commande Vc, tandis que l'entrée de commande de la seconde porte reçoit les signaux de commande Vc après inversion de polarité et un retard à l'ouverture d'une faible valeur ε2, ces fonctions étant réalisées par la porte "NOR" 55 et l'élément de retard 56.

La figure 5 est un chronogramme des principaux signaux du commutateur E/R. La courbe A montre la forme d'onde des signaux de commande Vc de la porte 51. La courbe B représente la forme d'onde du signal de radiofréquence Ee à la sortie du circulateur 50; le retard de temps ε1 est introduit par le temps de commutation de la porte 51. La courbe C montre la forme d'onde du signal à radiofréquence réfléchi par le TOS de l'antenne. Ce signal de couplage émission-réception est retardé d'un temps ε2 introduit par la liaison circulateur-antenne. Enfin la courbe D représente les périodes de fermeture Tf et d'ouverture To du circuit de porte 53. On peut voir que le signal parasite de couplage émission-réception est bloqué par le circuit de porte 53 et ne peut atteindre le récepteur. Le temps de retard ε1 et ε2 sont extrêmement courts et dans la pratique sont de l'ordre à la nanoseconde.

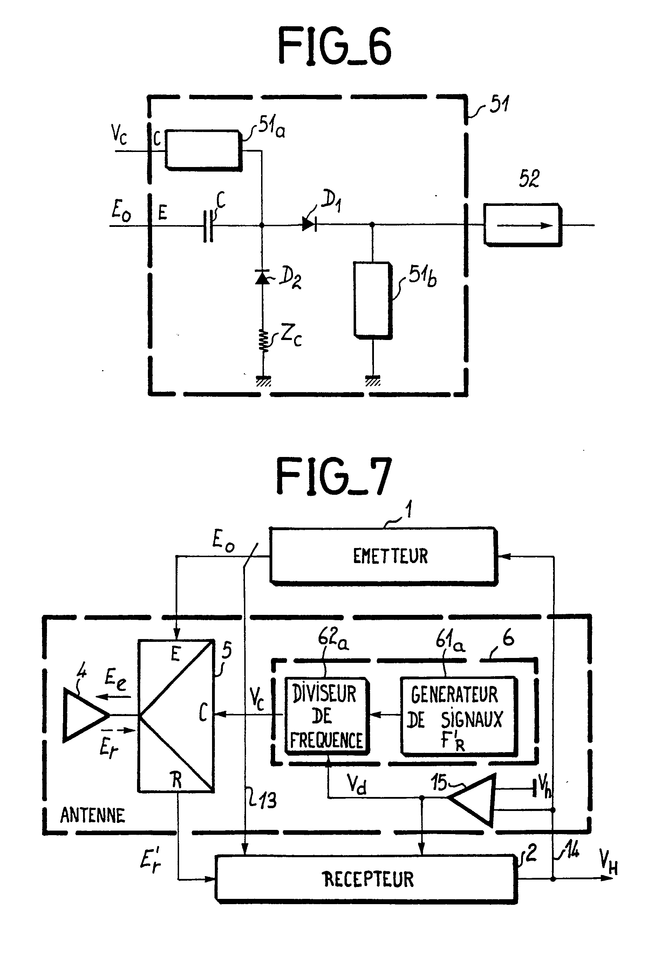

La figure 6 est un schéma synoptique qui montre une forme de construction d'un circuit de porte, tel que le circuit de porte 51. Les éléments 51a et 51b sont des filtres à radiofréquence qui permettent de bloquer le passage des signaux à radiofréquence. L'élément 6 est une capacité qui permet de transmettre les signaux à radiofréquence et de bloquer efficacement les signaux de commande Vc du circuit de porte. Les éléments actifs de commutation du circuit de porte sont fournis par les diodes D1 et D2 du type P.I.N. La diode D2 est montée en série avec une impédance Zc sensiblement égale à l'impédance des lignes de transmission à radiofréquence. Il en résulte que l'impédance d'entrée du circuit de porte est maintenue constante quelque soit l'état de conduction du circuit de porte. On pourra également noter que l'isolateur unidirectionnel peut être inséré en amont du circuit de porte 51.

D'autres formes de construction du commutateur E/R sont envisageables, par exemple, le commutateur E/R peut être réalisé sous une forme ingégrée et les éléments actifs de commutation constitués par des dispositifs FET.AsGa comme décrit dans l'article de Y. AYASLI "Microwave Switching with GaAs FET's" publié dans la revue "Microwave Journal", Nov. 1982, page 60. Un tel commutateur permet d'atteindre des vitesses de commutation inférieures à la nanoseconde et de commuter des signaux microondes d'un niveau de plusieurs watts.

La figure 4 représente également une forme de réalisation du générateur 6 des signaux de commande Vc du commutateur E/R. Ce générateur comprend un oscillateur 61 qui fournit des signaux périodiques de fréquence de récurrence $2F_R$. Les signaux de sortie de l'oscillateur sont appliqués à un diviseur de fréquence 62 pour fournir les signaux de commande Vc de fréquence de récurrence égale à $F_R$.

La figure 7 sous la forme d'un bloc diagramme représente une variante de réalisation du radioaltimètre décrit à la figure 2. La composante du signal d'intermodulation d'amplitude de l'oscillateur à radiofréquence de l'émetteur ne peut être complètement éliminée par le mélangeur équilibré d'entrée du récepteur. Il en résulte qu'un signal parasite est présent à l'entrée du filtre passe-bande de l'amplificateur à audiofréquence. Ce signal parasite comporte une composante de fréquence égale à la fréquence de récurrence Fm = $Tm^{-1}$ des signaux de modulation en fréquence de l'émetteur, et sa puissance est constante et indépendante de l'altitude. A l'altitude minimale de mesure Hmin = C/2ΔF, la fréquence de battement $f_b$ du signal écho détecté est sensiblement égale à la fréquence de récurrence Fm; aussi ce signal parasite ne peut-il être suffisamment atténué par filtrage, alors, son niveau doit être, nécessairement, inférieur à celui du signal de battement entre le signal écho et l'onde locale du mélangeur équilibré. Si l'on se reporte à l'équation (7b), celle-ci peut s'écrire sous la forme:

$$\frac{1}{Ko} = \frac{4\pi^2 \cdot C^2 \cdot TR^2}{GA \cdot \lambda o^2 \cdot \eta s}$$

or

$$H_{Max} = \frac{C \cdot TR}{4} \text{ et } H_{min} = \frac{C}{2\Delta F}$$

d'où

$$\frac{1}{Ko} = \frac{(4\pi)^2 \cdot C^2}{GA \cdot \lambda o^2 \cdot \Delta F^2} \cdot \left(\frac{H_{max}}{H_{min}}\right)^2 = K1 \cdot \left(\frac{H_{max}}{H_{min}}\right)^2$$

donc le coefficient d'atténuation 1/Ko est proportionnel au carré de la dynamique d'altitude de fonctionnement du radioaltimètre. Une solution permettant d'accroître le rapport du signal écho au signal parasite est de partager la plage de mesure (Hmin—Hmax) en deux gammes, une gamme basse altitude pour laquelle la période de récurrence est N fois plus petite que la période de récurrence

$$T_R = \frac{4Hmax}{C}$$

et une gamme haute altitude où la période de récurrence est égale à

$$T_R = \frac{4Hmax}{C}.$$

La figure 7 représente une forme de réalisation des circuits complémentaires permettant de modifier la fréquence des signaux fournis par le générateur 6 des signaux de commande du commutateur E/R. Ce générateur 6 comprend un oscillateur 61 a qui délivre des signaux d'horloge à une fréquence $F'_R = 2N \cdot F_R = N \cdot C/4Hmax$ et ces signaux d'horloge sont appliqués à un diviseur de fréquence 62a. Ce diviseur de fréquence comporte une entrée de commande permettant de varier le facteur de division, ce facteur de division étant égal à N dans la gamme des basses altitudes et à deux dans la gamme des altitudes élevées. Le signal Vd de commande du diviseur de fréquence est fourni par un comparateur à seuil 15, dont une première entrée est connectée au signal de mesure d'altitude $V_H$ et une seconde entrée est reliée à une source de référence Vs correspond à la transition des deux gammes de mesure du radioaltimètre. Le signal de sortie Vd du comparateur peut-être également utilisé pour réduire le gain du récepteur dans la gamme des basses altitudes de mesure, ou, de façon équivalente, pour modifier la valeur de seuil du détecteur de présence d'un signal écho d'altitude qui permet de commuter les modes de fonctionnement du fonctionnement du radioaltimètre, soit dans le mode acquisition, soit dans le mode poursuite du signal écho d'altitude. L'altitude mesurée H peut être élaborée selon une technique numérique, à partir du signal de modulation Vm de l'oscillateur à radiofréquence 8 de l'émetteur et du signal de sortie du générateur de signaux 61a. Alors le comparateur de niveau 15 peut-être un comparateur numérique dont le signal de sortie Vd permet de modifier le facteur de division du diviseur 62a, d'une part, et le gain du récepteur 2, d'autre part. Par ailleurs, la division en deux gammes de la plage de fonctionnement (Hmax—Hmin) du radioaltimètre n'est pas limitative et une division en trois ou plusieurs gammes est envisageable si l'on souhaite améliorer le rapport du signal écho au signal parasite et étendre la plage de fonctionnement du radioaltimètre au-delà de 100 m.

On voit maintenant plus clairement les avantages que présente le radioaltimètre de l'invention: l'altitude minimale (Hmin) de mesure est extrêmement faible, le T.O.S. de l'antenne n'est par un paramètre critique, ce qui permet de réaliser l'antenne avec un faible coût, l'installation du radioaltimètre et son intégration dans un missile conduisent à des dispositions relativement simples.

L'invention n'est pas limitée dans ces caractéristiques par la forme de réalisation décrite, notamment d'autres variantes de construction du commutateur E/R sont envisageables, la fréquence de base de l'oscillateur du générateur des signaux de commande du commutateur E/R peut être différente si les diviseurs de fréquences associés sont adaptés en conséquence. La réalisation de l'oscillateur à radiofréquence de l'émetteur a été donnée à titre illustratif mais nullement limitatif.

L'application du radioaltimètre n'est pas limitée à un missile AIR/MER, mais d'une façon générale peut être étendue aux détecteurs de proximité électromagnétiques.

## Revendications

1. Sonde radioaltimètre comprenant un émetteur (1) à onde continue modulée linéairement en fréquence, un récepteur homodyne (2) qui comporte, en série, un mélangeur à radiofréquence relié à une source d'un signal de fréquence locale, un amplificateur passe-bande (11) à audiofréquence, en sortie duquel est obtenu un signal de fréquence égale à la fréquence de battement entre le signal local du mélangeur et le signal écho et des circuits d'acquisition et de poursuite du signal d'écho d'altitude, lesdits circuits fournissant un signal de mesure d'altitude (H), une antenne directive commune (4) et des moyens (5) pour relier l'émetteur et le récepteur à ladite antenne, caractérisée en ce que lesdits moyens comprennent un commutateur E/R (5) relié à l'antenne directive (4), ce commutateur comportant un accès d'entrée (E) connecté à la sortie dudit émetteur, un accès de sortie (R) connecté à l'entrée dudit récepteur et une entrée de commande, laquelle est connectée à un générateur (6) de signaux périodiques (Vc) dont la période de récurrence $(T_R) = (4\ Hmax)/C$, Hmax étant une altitude maximale de mesure prédéterminée et C étant la vitesse de propagation des ondes électromagnétiques, que le mélangeur (10) est du type équilibré et que les circuits (12) d'acquisition et de poursuite founissent un signal de commande $(V_R)$ de la période de récurrence de la modulation en fréquence, de manière à ce que la période de récurrence (Tm) de la modulation en fréquence (Vm) soit proportionnelle à l'altitude mesurée (H) et qu'un signal écho soit détecté par l'amplificateur passe-bande à audiofréquence.

2. Sonde radioaltimétrique selon la revendication 1, caractérisée en ce que le commutateur E/R (5) comporte un premier circuit de porte (51) connecté à l'accès d'entrée et un second circuit de porte (53) connecté à l'accès de sortie.

3. Sonde radioaltimétrique selon la revendication 1, caractérisée en ce que le générateur (6) de signaux de commande du commutateur E/R (5) comprend, connecté en série: un oscillateur (61) qui fournit des signaux d'horloge à un diviseur de fréquence (62), lequel est connecté à l'entrée de commande (C) du commutateur E/R.

4. Sonde radioaltimétrique selon la revendication 3, caractérisée en ce que le diviseur de fréquence du générateur (6) des signaux de commande du commutateur E/R (5) est un oscillateur (61a) dont l'entrée de commande est connectée à une source de signal (Vd) proportionnelle à l'altitude mesurée.

## Patentansprüche

1. Funk-Höhenmesser, mit einem Sender (1), der eine linear frequenzmodulierte Welle aussendet, mit einem Homodyn-Empfänger (2), der in Reihe einen an eine Lokalfrequenz-Signalquelle angeschlossenen Hochfrequenzmischer, einen Verstärker (11) mit Bandpaßcharakteristik im Audiofrequenzbereich, an dessen Ausgang ein Signal einer Frequenz gleich der Schwebungsfrequenz zwischen dem Lokalfrequenzsignal des Mischers und dem Echosignal erhalten wird, und Erfassungs- und Nachführungskreise für das Echo-Höhensignal enthält, die ein Höhen-Meßsignal (H) liefern, mit einer gemeinsamen Richtantenne (4) und mit Mitteln (5), um Sender und Empfänger an die Antenne anzuschliessen, dadurch gekennzeichnet, daß diese Mittel einen Umschalter E/R (5) ausweisen, der an die Richtantenne (4) angeschlossen ist und einen an den Ausgang des Senders angeschlossenen Eingang (E), einen an den Eingang des Empfängers angeschlossenen Ausgang (R) und einen Steuereingang aufweist, der mit einem Generator (6) für periodische Signal (Vc) verbunden ist, dessen Periodendauer $(T_R)$ gleich (4 Hmax)/C ist, wobei Hmax eine vorgegebene maximale Meßhöhe und C die Fortpflanzungsgeschwindigkeit der elektromagnetischen Wellen ist, daß der Mischer (10) ein äquilibrierter Mischer ist und daß die Erfassungs- und Nachführungskreise (12) ein Steuersignal $(V_R)$ liefern, dessen Periodendauer gleiche der der Frequenzmodulation ist, derart, daß die Periodendauer (Tm) der Frequenzmodulation (Vm) proportional zur gemessenen Höhe (H) ist und daß ein Echosignal vom Verstärker mit Bandpaßcharakteristik im Audiofrequenzbereich erfaßt wird.

2. Funk-Höhenmesser nach Anspruch 1, dadurch gekennzeichnet, daß der Umschalter E/R (5) eine an den Eingang (E) angeschlossenen erste Torschaltung (51) und eine an den Ausgang (R) angeschlossene zweite Torschaltung (53) aufweist.

3. Funk-Höhenmesser nach Anspruch 1, dadurch gekennzeichnet, daß der Generator (6) zur Steuerung des Umschalters E/R (5) in Reihenschaltung einen Oszillator (61) und einen Frequenzteiler (62) aufweist, wobei letzterer von ersterem Taktsignale zugeführt erhält und an den Steuereingang (c) des Umschalters E/R angeschlossen ist.

4. Funk-Höhenmesser nach Anspruch 3, dadurch gekennzeichnet, daß der Frequenzteiler des Generators (6) zur Steuerung des Umschalters E/R (5) ein Oszillator (61a) ist, dessen Steuereingang an eine Quelle eines zur gemessenen Höhe proportionalen Signals (Vd) angeschlossen ist.

## Claims

1. A radioelectric altimeter supplied with a transmitter (1) capable of transmitting a continuous wave bearing a linear frequency modulation, a receiver of the homodyne type (2) including, in series, a radio frequency mixer connected to a local frequency signal source, an audio frequency passband amplifier (11) supplying a signal at a frequency equal to the beat frequency between the local signal of the mixer and the echo signal, and circuits for the acquisition and updating of the altimeter echo signal, said circuits supplying an altimeter signal (H), the altimeter being further supplied with a common directive antenna (4) and with means (5) capable of connecting the transmitter and the receiver to said antenna, characterized in that said means include a switch E/R (5) connected to the directive antenna (4) and comprising an input terminal (E) connected to the output of said transmitter, an output terminal (R) connected to the input of said receiver, and a control input connected to a generator (6) supplying periodic signals (Vc) whose

repetition period ($T_R$) is equal to (4 Hmax)/C, whereby Hmax is a predefined maximum height to be measured and C is the electromagnetic wave propagation velocity, that the mixer (10) is of the balanced type and that the acquisition and updating circuits (12) supply a control signal ($V_R$) whose repetition period equals that of the frequency modulation, such that the repetition period (Tm) of the frequency modulation (Vm) is proportional to the measured height (H) and that an echo signal is detected by the audio frequency passband amplifier.

2. A radioelectric altimeter according to claim 1, characterized in that the switch E/R (5) comprises a first gate circuit (51) connected to the input terminal and a second gate circuit (53) connected to the output terminal.

3. A radioelectric altimeter according to claim 1, characterized in that the generator (6) supplying control signals for the switch E/R (5) comprises in series an oscillator (61) and a frequency divider (62), the latter receiving clock signals from the oscillator and being connected to the control input (C) of the switch E/R.

4. A radioelectric altimeter according to claim 3, characterized in that the frequency divider included in the generator (6) supplying control signals to the switch E/R (5) is an oscillator (61a) whose control input is connected to a source of a signal (Vd) which is proportional to the measured height.

FIG_1

MODULATEUR — 140

OSCILLATEUR R,F (GUNN) — 130 — 100

PROCESSEUR ET COMPTEUR DE FREQUENCE — 160

DETECTEUR R F — 150

$V = K.H$

110

H

120

1

# FIG_2

EP 0 169 127 B1

FIG_3

# FIG_4

# FIG_5

# FIG_6

# FIG_7